# FASCICULE DE BREVET EUROPEEN

(11) **EP 4 237 389 B1**
(45) Date de publication et mention de la délivrance du brevet: **18.09.2024**
(21) Numéro de dépôt: 21816123.0
(22) Date de dépôt: 27.10.2021
(51) Int. Cl.: C04B 35/80, B29B 11/16, F01D 5/28, C04B 37/00, B32B 18/00

(54) **PROCEDE DE FABRICATION D'UNE AUBE DE TURBOMACHINE EN MATERIAU COMPOSITE**
VERFAHREN ZUR HERSTELLUNG EINER TURBOMASCHINENSCHAUFEL AUS EINEM VERBUNDSTOFF
METHOD FOR FABRICATING A TURBOMACHINE BLADE MADE FROM A COMPOSITE MATERIAL

(30) Priorité: 27.10.2020 FR 2010984
(43) Date de publication de la demande: 06.09.2023
(73) Titulaire: Safran Ceramics, 33185 Le Haillan (FR)
(72) Inventeur: CONETE, Eric, 77550 MOISSY-CRAMAYEL (FR)
(74) Mandataire: Cabinet Beau de Loménie
(86) Numéro de dépôt international: PCT/FR2021/051884
(87) Numéro de publication internationale: WO 2022/090664

(56) Documents cités:
- EP-A1- 2 942 339
- EP-A1- 3 109 043
- WO-A2-2010/077401
- FR-A1- 2 943 942

## Description

### Domaine technique

Le présent exposé concerne un procédé de fabrication d'une aube de turbomachine en matériau composite, en particulier pour moteur aéronautique.

### Technique antérieure

Il est connu de mettre en oeuvre dans les turbomachines des aubes mobiles formées d'un matériau métallique. Il est souhaitable de remplacer ces aubes en matériau métallique par des aubes formées d'un matériau composite afin réduire la masse des turbomachines. Un tel remplacement est d'autant plus avantageux que certains matériaux composites comme les matériaux composites à matrice céramique sont compatibles avec une exposition à une température de fonctionnement accrue, permettant ainsi d'améliorer les performances du moteur.

On connaît le document WO2014/076408 qui décrit une préforme fibreuse pour une aube de turbomachine obtenue par tissage tridimensionnel monobloc. Toutefois, le tissage tridimensionnel peut s'avérer un procédé complexe. WO 2010/077401 divulgue un procédé de fabrication d'une aube de turbomachine en matériau composite à matrice céramique.

Par ailleurs, le distributeur est soumis à des efforts liés au flux aérodynamique dans la veine et à l'effet piston sur le carter sous distributeur dus à la différence de pression entre les cavités amont et aval sous distributeur. Ces efforts peuvent créer un moment autour de la fixation entre le distributeur et le carter et donc réduire les propriétés mécaniques de la turbomachine.

Il existe donc un besoin pour disposer de nouveaux procédés permettant de fabriquer de manière simple une aube de turbomachine en matériau composite présentant les propriétés mécaniques et thermiques souhaitées tout en ayant des formes relativement complexes.

### Exposé de l'invention

Le présent exposé vise à remédier au moins en partie à ces inconvénients.

Le présent exposé concerne un procédé de fabrication d'une aube de turbomachine en matériau composite à matrice céramique comprenant une pale et une plateforme, le procédé comprenant :
- réalisation d'une première préforme fibreuse comprenant des fibres céramiques, la première préforme fibreuse formant préforme de pale ;
- réalisation d'une deuxième préforme fibreuse comprenant des fibres céramique, la deuxième préforme fibreuse comprenant un logement, la deuxième préforme fibreuse formant préforme de plateforme ;
- réalisation d'un toron de fibres céramiques ;
- consolidation de la première préforme fibreuse en une seule pièce, de la deuxième préforme fibreuse en une seule pièce et du toron de fibres céramiques pour former une première préforme consolidée, une deuxième préforme consolidée comprenant un logement et un toron consolidé ;
- assemblage de la première préforme consolidée et de la deuxième préforme consolidée, par engagement et coopération de la première préforme consolidée dans le logement, le toron consolidé étant interposé entre la première préforme consolidée et la deuxième préforme consolidée ;
- co-densification de l'assemblage pour former l'aube de turbomachine.

Une préforme est dite à l'état consolidé lorsqu'elle a subi une étape de consolidation durant laquelle sa porosité initiale a été partiellement comblée par un dépôt d'une phase de consolidation, cette préforme à l'état consolidé conservant une porosité résiduelle laquelle peut être en tout ou partie comblée lors de l'étape de co-densification ultérieure. Divers exemples de méthodes de consolidation sont détaillés dans la suite.

Une préforme est dite à l'état non consolidé lorsqu'elle est dépourvue d'une telle phase de consolidation. Une préforme à l'état non consolidé peut être à l'état sec ou être imprégnée par un précurseur d'un matériau d'une phase de consolidation, la consolidation n'étant dans ce dernier cas pas finalisée du fait de la non-transformation du précurseur en une phase de consolidation.

Ainsi, il est possible de fabriquer séparément une première et une deuxième préformes supportant chacune un nombre limité de fonctions de sorte à les rendre toutes deux facilement formables et d'assembler ces deux préformes afin de former la préforme constituant le renfort fibreux de l'aube à fabriquer. En séparant les fonctions de l'aube sur deux préformes fibreuses, il devient possible de simplifier la définition textile de chacune des première et deuxième préformes ainsi que de faciliter leur mise en forme éventuelle.

Ainsi, par rapport au cas où l'aube est fabriquée à partir d'une préforme fibreuse en une seule pièce, le procédé de fabrication de l'aube est significativement simplifiée. Une fois l'aube co-densifiée, le toron consolidé permet d'assurer la continuité des charges mécaniques et thermiques des plateformes à la pale de l'aube. Notamment, après co-densification, les efforts de cisaillement sont transmis de la première préforme consolidée à la deuxième préforme consolidée grâce à la présence du toron consolidé. Sa résistance mécanique est améliorée ce qui confère ainsi de bonnes propriétés mécaniques à l'aube fabriquée de sorte que l'aube de turbine forme un système homogène du point de vue du matériau.

A titre d'exemple non limitatif, le toron de fibres céramiques peut être obtenu avec des fils torsadés ou des fils tressés.

On comprend que la deuxième préforme fibreuse formant préforme de plateforme peut également former préforme d'autres parties de l'aube reliées à la plateforme, par exemple l'échasse et/ou le bulbe d'une aube mobile et/ou des léchettes.

L'étape de réalisation de la première préforme fibreuse ou de la deuxième préforme fibreuse peut être suivie d'une étape de mise en forme de la préforme fibreuse.

L'aube ainsi fabriquée peut être utilisée dans une turbine ou dans un compresseur de turbomachine.

Grâce au procédé, il est possible de fabriquer une aube de turbomachine en composite à matrice céramique permettant d'augmenter la performance des systèmes propulsifs par augmentation des températures de gaz et réduction des débits de refroidissement.

On comprend qu'il est possible de former dans le cadre du procédé défini ci-dessus une pluralité de plateformes ainsi qu'éventuellement des murets et becquets. On peut, en particulier, obtenir après mise en oeuvre du procédé une aube de turbomachine comportant une première plateforme située du côté du pied d'aube ainsi qu'une deuxième plateforme disposée en tête d'aube et formant un talon d'aube. Ainsi, dans certains modes de réalisation, le procédé peut comprendre la réalisation de plusieurs deuxième préforme fibreuses. Par exemple une deuxième préforme fibreuse formant préforme de plateforme en tête d'aube et une deuxième préforme fibreuse formant préforme de plateforme en pied d'aube.

Dans certains modes de réalisation, le toron consolidé peut être disposé dans une gorge formée au moins dans l'une de la première préforme consolidée ou de la deuxième préforme consolidée.

Dans certains modes de réalisation, la gorge peut être au moins partiellement usinée.

De préférence, l'usinage de la gorge est réalisé pour des préformes fibreuses présentant une épaisseur supérieure ou égale à 5 mm (millimètre).

Dans certains modes de réalisation, la gorge peut être au moins partiellement formée lors de l'étape de réalisation de la première préforme fibreuse et/ou de la deuxième préforme fibreuse.

De préférence, la formation de la gorge lors de l'étape de réalisation des préformes fibreuses est réalisé pour des préformes fibreuses présentant une épaisseur inférieure à 5 mm.

On comprend que la gorge peut être usinée dans une préforme consolidée (la première ou la deuxième) et être formée lors de l'étape de réalisation de la première ou deuxième préforme fibreuse.

Dans certains modes de réalisation, la deuxième préforme consolidée peut comprendre deux canaux d'insertion du toron consolidé dans la gorge.

Dans certains modes de réalisation, les canaux peuvent déboucher sur une face externe de la deuxième préforme consolidée.

Dans la description qui suit les termes « interne » et « externe » sont définis par rapport à la veine de flux dans la turbomachine.

On comprend que la deuxième préforme consolidée comprend une face interne et une face externe, la face interne étant destinée à délimiter une veine de flux de la turbomachine et la face externe étant la face opposée à la face interne.

On peut ainsi réduire les risques de perturbation du flux dans la veine.

Dans certains modes de réalisation, les canaux peuvent présenter un angle par rapport à la face externe supérieur ou égal à 1° et inférieur ou égal à 20°.

Cet angle permet de faciliter l'introduction et la sortie du toron dans les canaux.

Dans certains modes de réalisation, une partie du toron consolidé peut être retirée avant l'étape de co-densification.

A titre d'exemple non limitatif, les parties du toron consolidé qui dépassent de la face externe peuvent être arasé avant l'étape de co-densification.

Dans certains modes de réalisation, une partie du toron consolidé peut être retirée après l'étape de co-densification.

A titre d'exemple non limitatif, les parties du toron consolidé qui dépassent de la face externe peuvent être conservées pendant l'étape de co-densification pour favoriser la montée capillaire d'un liquide d'infiltration lors de l'étape de co-densification. Après co-densification, ces parties peuvent être retirées par usinage.

Dans certains modes de réalisation, la deuxième préforme consolidée peut comprendre une partie comportant une surépaisseur, la partie comportant la surépaisseur délimitant le logement.

Dans certains modes de réalisation, la première préforme fibreuse comprend des fibres céramiques tissées multicouche, des nappes de fibres céramiques ou des fibres céramiques longues unidirectionnelles.

On entend par tissage multicouche, le tissage réalisé entre une pluralité de couches de fils de chaîne et une pluralité de couches de fils de trame, éventuellement suivi d'une étape de mise en forme et également le tressage.

Les étapes de tissage multicouche de fibres céramiques peuvent être suivies d'une étape de mise en forme de la préforme fibreuse.

L'emploi de nappes de fibres céramiques ou de fibres céramiques longues unidirectionnelles permet de s'affranchir d'une étape de tissage.

Dans certains modes de réalisation, la deuxième préforme fibreuse comprend des fibres céramiques tissées multicouche, des nappes de fibres céramiques, des fibres céramiques longues unidirectionnelles ou des fibres céramiques courtes.

L'emploi de nappes de fibres céramiques ou de fibres céramiques longues unidirectionnelles permet de s'affranchir d'une étape de tissage.

L'emploi de fibres céramiques courtes permet de s'affranchir des limitations associées en termes de géométrie réalisable lors de l'emploi de fibres céramiques tissées multicouche, de nappes de fibres céramiques ou de fibres céramiques longues unidirectionnelles.

Les fibres courtes peuvent avoir une longueur comprise entre 50 µm et 5000 µm, par exemple entre 50 µm et 1000 µm, par exemple entre 100 µm et 500 µm, par exemple sensiblement de 250 µm. Sauf mention contraire, une dimension « moyenne » désigne la dimension donnée par la distribution granulométrique statistique à la moitié de la population, dite d₅₀.

Dans certains modes de réalisation, les fibres céramiques sont des fibres de carbure de silicium.

A titre d'exemples non limitatifs, les fibres céramiques utilisées peuvent être des fibres de carbone ou de carbure de silicium (SiC) commercialisé sous la dénomination Nicalon^{™}, Hi-Nicalon ou Hi-Nicalon^{™} Type S par la société japonaise Nippon Carbon et ayant par exemple un titre (nombre de filaments) de 0,5K (500 filaments).

A titre d'exemples non limitatifs, les première et deuxième préformes fibreuses peuvent chacune comporter des, notamment être formées de, fils de carbone. En variante, la première préforme fibreuse peut comporter des, notamment être formée de, fils de carbone et la deuxième préforme fibreuse peut comporter des, notamment être formée de, fils céramiques tels que des fils de carbure de silicium. En variante encore, les première et deuxième préformes fibreuses peuvent chacune comporter des, notamment être formées de, fils céramiques tels que des fils de carbure de silicium.

Dans certains modes de réalisation, l'aube de turbomachine est un redresseur de turbomachine.

Dans certains modes de réalisation, l'aube de turbomachine est une aube mobile de turbomachine.

Dans certains modes de réalisation, la turbomachine peut être un turboréacteur.

Dans certains modes de réalisation, la consolidation peut être réalisée par dépôt d'une phase de consolidation déposée par voie gazeuse ou par voie liquide.

Dans certains modes de réalisation, la co-densification peut être réalisée par un procédé d'infiltration à l'état fondu.

Par exemple, la composition fondue pour l'infiltration peut comprendre du silicium.

Dans certains modes de réalisation, les fibres céramiques peuvent être revêtues d'une couche d'interphase, par exemple d'une couche d'interphase en nitrure de bore (BN) ou en pyrocarbone (PyC).

Cette couche d'interphase permet de dévier les fissures de la matrice céramique lors de l'utilisation de la pièce. La couche d'interphase a, par exemple, une épaisseur de 500 nm. La couche d'interphase peut également être revêtue d'une couche de protection, par exemple d'une couche de carbure de silicium de quelques microns d'épaisseur. Cette couche de protection permet de protéger l'interphase des potentielles attaques chimiques de la composition fondue lors de l'infiltration de la première préforme et d'éventuellement de la deuxième préforme.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique en coupe longitudinale d'une turbomachine.
[Fig. 2] La figure 2 est une vue en perspective d'une portion de redresseur d'une turbine haute pression de la turbomachine de la figure 1.
[Fig. 3] La figure 3 est une vue en perspective d'un redresseur.
[Fig. 4] La figure 4 est une vue en perspective d'une aube mobile.
[Fig. 5] La figure 5 est un ordinogramme représentant les étapes d'un procédé de fabrication d'une aube de turbomachine en matériau composite à matrice céramique.
[Fig. 6] La figure 6 représente des éléments pour la mise en oeuvre du procédé de la figure 5.
[Fig. 7] La figure 7 représente une étape d'assemblage du procédé de la figure 5.
[Fig. 8] La figure 8 est une vue en coupe partielle montrant une gorge selon un mode de réalisation.
[Fig. 9] La figure 9 est une vue en partielle en coupe d'un assemblage selon un mode de réalisation.
[Fig. 10] La figure 10 est une vue en partielle en coupe d'un assemblage selon un autre mode de réalisation.
[Fig. 11] La figure 11 est une vue en partielle en coupe d'un assemblage selon un autre mode de réalisation.

Sur l'ensemble des figures, les éléments en commun sont repérés par des références numériques identiques.

### Description détaillée

Dans ce qui suit, les éléments communs aux différents modes de réalisation sont identifiés par les mêmes références numériques.

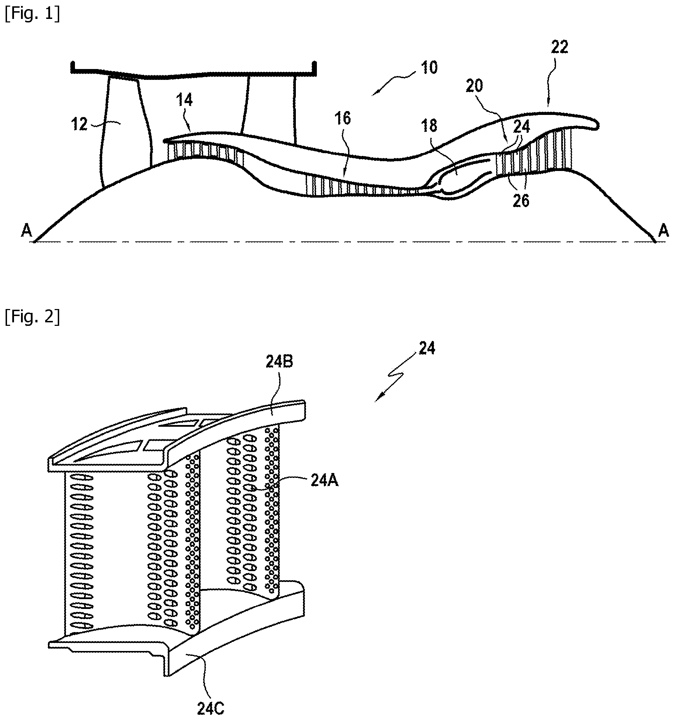

La figure 1 représente, en coupe selon un plan vertical passant par son axe principal A, un turboréacteur à double flux 10. Le turboréacteur à double flux 10 comporte, d'amont en aval selon la circulation du flux d'air, une soufflante 12, un compresseur basse pression 14, un compresseur haute pression 16, une chambre de combustion 18, une turbine haute pression 20, et une turbine basse pression 22.

La turbine haute pression 20 comprend une pluralité d'aubes mobiles 26 tournant avec le rotor et de redresseurs 24 montés sur le stator.

La figure 2 représente une portion de redresseur 24 d'une turbine haute pression 22 d'une turbomachine, par exemple un turboréacteur. La portion de redresseur 24 comprend, dans l'exemple de la figure 2, deux pales 24A jointes par respectivement une plateforme 24B en tête de pale, commune aux deux pales 24A et une plateforme 24C en pied de pale, commune aux deux pales 24A.

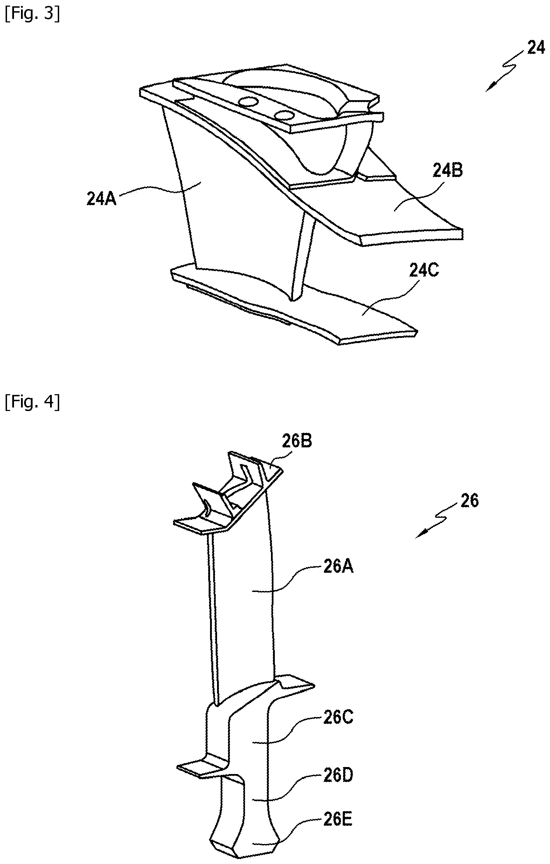

La figure 3 représente un redresseur 24 comprenant une pale 24A, une plateforme 24B en tête de pale et une plateforme 24C en pied de pale.

La figure 4 représente une aube mobile 26 comprenant une pale 26A, une plateforme 26B en tête de pale et une plateforme 26C en pied de pale. Comme représenté sur la figure 3, la plateforme 26C en pied de pale est prolongée par une échasse 26D et un bulbe 26E.

Le procédé 100 de fabrication d'une aube de turbomachine en matériau composite à matrice céramique, en particulier du redresseur 24 de la figure 3, va être décrit en faisant référence aux figures 4 à 11.

Le procédé 100 comprend une étape de réalisation 102 d'une première préforme fibreuse 28A comprenant des fibres céramiques, la première préforme fibreuse 28A formant préforme de pale.

Le procédé 100 comprend une étape de réalisation 104 d'une deuxième préforme fibreuse 28B comprenant des fibres céramiques, la deuxième préforme fibreuse 28B comprenant un logement 28D, la deuxième préforme fibreuse 28B formant préforme de plateforme, par exemple en tête de pale.

Le procédé 100 comprend une étape de réalisation 104 d'une deuxième préforme fibreuse 28C comprenant des fibres céramiques, la deuxième préforme fibreuse 28C comprenant un logement 28E, la deuxième préforme fibreuse 28C formant préforme de plateforme, par exemple en pied de pale.

On comprend que l'étape de réalisation 104 peut être répétée pour former plusieurs deuxièmes préformes fibreuses, par exemple deux deuxièmes préformes fibreuses, l'une formant préforme de plateforme en tête de pale et l'autre formant préforme de plateforme en pied de pale.

La première préforme fibreuse 28A peut être réalisée par tissage multicouche de fibres céramiques pour former une première préforme fibreuse 28A en une seule pièce, par superposition de nappes de fibres de céramiques ou par superposition de fibres céramiques unidirectionnelles. On comprend que les nappes et les fibres céramiques unidirectionnelles peuvent présenter dans chaque couche une orientation différente.

La deuxième préforme fibreuse 28B, 28C peut être réalisée par tissage multicouche de fibres céramiques pour former une deuxième préforme fibreuse 28A en une seule pièce, par superposition de nappes de fibres de céramiques ou par superposition de fibres céramiques unidirectionnelles. On comprend que les nappes et les fibres céramiques unidirectionnelles peuvent présenter dans chaque couche une orientation différente. La deuxième préforme fibreuse 28B, 28C peut être réalisée avec des fibres courtes.

Les étapes de tissage multicouche de fibres céramiques peuvent être suivies ou non d'étapes respectives de mise en forme des préformes fibreuses.

Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure. D'autres types de tissage multicouche pourront être utilisés. Différents modes de tissage multicouche utilisables sont notamment décrits dans le document WO2006/136755.

Le tissage peut être réalisé avec des fils de chaîne s'étendant dans la direction longitudinale des préformes, étant noté qu'un tissage avec des fils de trame dans cette direction est également possible.

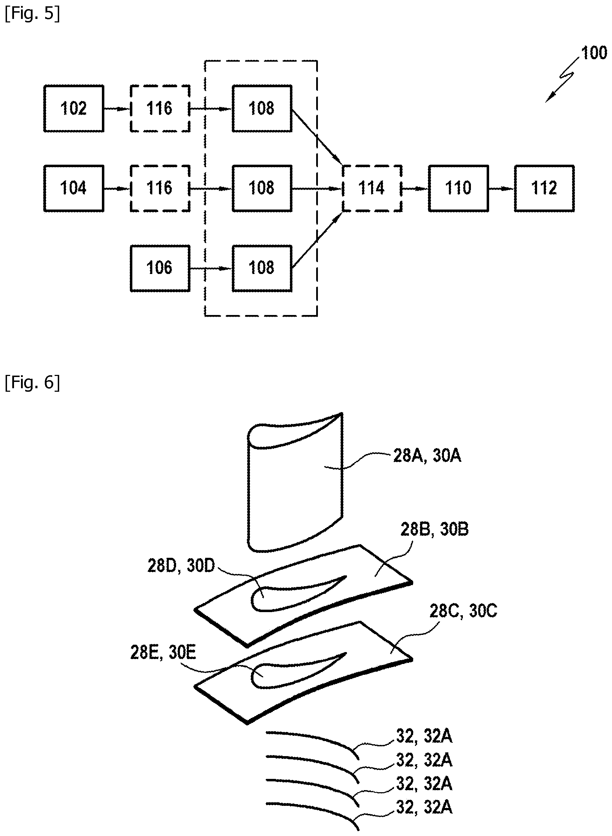

Le procédé 100 comprend une étape de réalisation 106 d'un toron 32A de fibres céramiques, dans le mode de réalisation des figures 5 à 11, quatre torons 32A de fibres céramiques. Les torons de fibres céramiques 32A peuvent par exemple être obtenus avec des fils torsadés ou des fils tressés.

La figure 6 représente la première préforme fibreuse 28A formant préforme de pale, la deuxième préforme fibreuse 28B formant préforme de plateforme en tête de pale, la deuxième préforme fibreuse 28C formant préforme de plateforme en pied de pale et quatre torons de fibres céramiques 32A.

Les fibres céramiques des première, des deuxièmes préformes fibreuses 28A, 28B, 28C et des torons 32A sont par exemple en Hi-Nicalon^{™} Type S.

Le procédé 100 comprend une étape de consolidation 108 de la première préforme fibreuse 28A, des deuxièmes préformes fibreuses 28B, 28C et des quatre torons de fibres céramiques 32A pour former une première préforme consolidée 30A en une seule pièce, deux deuxièmes préformes consolidées 30B, 30C en une seule pièce chacune comprenant chacune un logement 30D, 30E et quatre torons consolidés 32, comme représenté sur la figure 6.

A titre d'exemple non limitatif, les torons consolidés 32 peuvent présenter un diamètre d'environ 3 mm.

On comprend que le logement 30D de la deuxième préforme consolidée 30B formant préforme de plateforme en tête de pale correspond, après consolidation, au logement 28D de la deuxième préforme fibreuse 28D formant préforme de plateforme en tête de pale.

De même, on comprend que le logement 30E de la deuxième préforme consolidée 30C formant préforme de plateforme en pied de pale correspond, après consolidation, au logement 28E de la deuxième préforme fibreuse 28E formant préforme de plateforme en pied de pale.

Les préformes fibreuses 28A, 28B, 28C et les torons 32A de fibres céramiques sont consolidés par dépôt d'une phase de consolidation dans la porosité des préformes fibreuses 28A, 28B, 28C et des torons 32A de fibres céramiques, cette phase de consolidation étant déposée par voie gazeuse ou par voie liquide de façon connue en soi.

On a représenté les étapes de consolidation 108 des préformes et des torons comme étant des étapes distinctes mais les préformes fibreuses et les torons peuvent être consolidés lors d'une étape commune de consolidation.

Le procédé par voie liquide consiste à imprégner la préforme par une composition liquide contenant un précurseur du matériau de la phase de consolidation. Le précurseur se présente habituellement sous forme d'un polymère, tel qu'une résine, éventuellement dilué dans un solvant. La préforme est placée dans un moule pouvant être fermé de manière étanche. Ensuite, on referme le moule et on injecte le précurseur liquide de phase de consolidation (par exemple une résine) dans le moule afin d'imprégner la préforme.

La transformation du précurseur en phase de consolidation est réalisée par traitement thermique, généralement par chauffage du moule, après élimination du solvant éventuel et réticulation du polymère.

Dans le cas de la formation d'une phase de consolidation en matériau céramique, le traitement thermique comporte une étape de pyrolyse du précurseur pour former la phase de consolidation en matériau céramique. A titre d'exemple, des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir à la consolidation souhaitée.

Dans le procédé par voie gazeuse (infiltration chimique en phase vapeur de la phase de consolidation ; procédé « CVI »), la préforme fibreuse est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la phase de consolidation par dépôt, au coeur du matériau au contact des fibres, d'un matériau solide résultant d'une décomposition d'un constituant de la phase gazeuse ou d'une réaction entre plusieurs constituants. La formation d'une phase de consolidation SiC peut être obtenue avec du méthyltrichlorosilane (MTS) donnant du SiC par décomposition du MTS.

La première préforme consolidée 30A et les deuxièmes préformes consolidées 30B, 30C peuvent éventuellement être mise en forme par exemple par usinage.

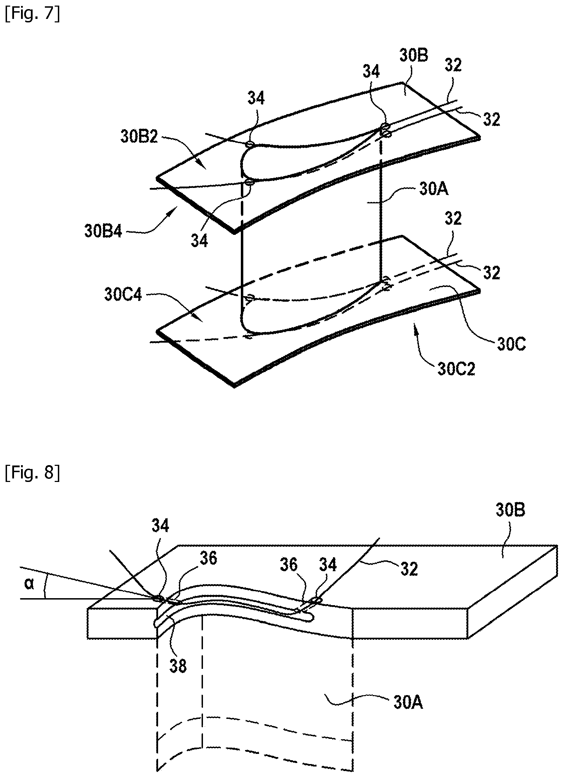

Le procédé 100 comprend une étape d'assemblage 110 de la première préforme consolidée 30A et des deux deuxièmes préformes consolidées 30B, 30C, par engagement et coopération de la première préforme consolidée 30A, respectivement dans le logement 30D, 30E des deux deuxièmes préformes consolidées 30B, 30C, les torons consolidés 32 étant interposés entre la première préforme consolidée 30A et chacune des deuxièmes préformes consolidées 30B, 30C, comme représenté sur la figure 7.

On comprend qu'on insère la première préforme consolidée 30A dans les logements 30D, 30E des deux deuxièmes préformes consolidées 30B, 30C.

Le procédé 100 comprend une étape de co-densification 112 de l'assemblage pour former l'aube de turbomachine, par exemple le redresseur 24 de la figure 3.

Une co-densification des première et deuxième préformes ainsi assemblées est ensuite réalisée.

Dans un exemple de réalisation, la co-densification peut être réalisée par un procédé d'infiltration à l'état fondu.

Dans ce procédé, il y a tout d'abord introduction, dans la porosité des première et deuxième préformes assemblées, de charges, par exemple de charges réactives les charges étant par exemple choisies parmi SiC, Si₃N₄, C, B, et leurs mélanges. L'introduction des charges peut, par exemple, être effectuée par voie barbotine (« Slurry cast »), par aspiration de poudres sub-microniques (APS) ou par un procédé d'injection du type procédé de moulage par injection de résine (« Resin Transfer Molding » ou « RTM ») dans lequel un traitement thermique est effectué après l'injection pour faire évaporer le milieu liquide.

Une fois les charges introduites, les première et deuxième préformes sont ensuite infiltrées avec une composition d'infiltration à l'état fondu comportant par exemple du silicium afin de former une matrice et obtenir ainsi l'aube de turbomachine. La composition d'infiltration peut être constituée de silicium fondu ou en variante être sous la forme d'un alliage fondu de silicium et d'un ou plusieurs autres constituants. Le(s) constituant(s) présent(s) au sein de l'alliage de silicium peuvent être choisi(s) parmi B, Al, Mo, Ti, et leurs mélanges. Lorsque des charges réactives sont utilisées, sensiblement l'intégralité des charges réactives peut être consommée durant la réaction entre la composition d'infiltration et les charges réactives. En variante, seule une partie des charges réactives est consommée durant cette réaction.

Dans un exemple de réalisation, l'infiltration à l'état fondu réalisée peut permettre l'obtention d'une matrice par réaction entre des charges solides, par exemple de type C, SiC ou Si₃N₄ introduites par voie barbotine ou préimprégnées, et un alliage fondu à base de silicium. La réaction peut se produire à une température supérieure ou égale à 1420°C. Compte tenu des températures élevées mises en oeuvre, il peut être avantageux qu'une partie au moins des première et deuxième préformes soit constituée de fibres thermostables, par exemple de type Hi-Nicalon^{™} Type S.

Les fils des première et deuxième préformes peuvent, avant infiltration de la composition d'infiltration, avoir été revêtus d'une couche d'interphase, par exemple en BN ou BN dopé par du silicium, ainsi que d'une couche de carbure, par exemple en SiC et/ou Si₃N₄, par exemple réalisée par voie gazeuse.

En variante, on peut tout d'abord réaliser une première étape de co-densification des première et deuxième préformes assemblées par densification par voie liquide, ce type de procédé étant tel que décrit plus haut relativement à l'étape de consolidation des préformes fibreuses. L'étape peut alors être suivie d'une deuxième étape de co-densification par infiltration chimique en phase vapeur (ce type de procédé étant tel que décrit plus haut relativement à l'étape de consolidation des préformes fibreuses) ou par infiltration à l'état fondu. La deuxième étape de co-densification est réalisée afin de combler tout ou partie de la porosité résiduelle résultant après mise en oeuvre de la première étape de co-densification. Une co- densification combinant voie liquide et voie gazeuse peut avantageusement permettre de faciliter la mise en oeuvre, limiter les coûts et les cycles de fabrication tout en obtenant des caractéristiques satisfaisantes pour l'utilisation envisagée.

En variante encore, on peut tout d'abord réaliser une première étape de co-densification des première et deuxième préformes assemblées par infiltration chimique en phase vapeur. L'étape de co-densification par infiltration chimique en phase vapeur peut être suivie d'une étape de mise en forme par exemple par usinage. On peut ensuite réaliser une deuxième étape de co-densification par un procédé d'infiltration à l'état fondu.

Comme représenté sur la figure 8, après consolidation 108 de la deuxième préforme consolidée 30B formant préforme de plateforme en tête de pale, et avant assemblage 110, une gorge 38 peut être usinée (étape 114) dans la deuxième préforme consolidée 30B. Cette gorge 38 est configurée pour recevoir au moins partiellement un toron consolidé 32.

Dans le mode de réalisation de la figure 8, la gorge 38 est visible depuis le logement 30D de la deuxième préforme consolidée 30B formant préforme de plateforme en tête de pale.

Dans le mode de réalisation de la figure 8, la deuxième préforme consolidée 30B formant préforme de plateforme en tête de pale comprend deux canaux 36 d'insertion du toron consolidé 32 dans la gorge 38. Les canaux 36 débouchent sur une face externe 30B2 de la deuxième préforme consolidée 30B formant préforme de plateforme en tête de pale. Les canaux 36 forment des orifices 34 sur la face externe 30B2 de la deuxième préforme consolidée 30B formant préforme de plateforme en tête de pale. Les canaux 36 peuvent présenter un angle α par rapport à la face externe 30B2, l'angle α étant supérieur ou égal à 1° et inférieur ou égal à 20°.

On comprend que la deuxième préforme consolidée 30B formant préforme de plateforme en tête de pale comporte une face interne 30B4, opposée à la face externe 30B2 et faisant face à la première préforme consolidée 30A. On comprend que la face interne 30B4 délimite en partie la veine aérodynamique.

Dans le mode de réalisation des figures 7 et 8, la gorge 38 est présente dans l'épaisseur de la deuxième préforme consolidée 30B formant préforme de plateforme en tête de pale et la gorge 38 est présente au moins de sorte qu'un toron consolidé 32 puisse être interposé entre la première préforme consolidée 30A et la deuxième préforme consolidée 30B formant préforme de plateforme en tête de pale, sur un côté intrados et sur un côté extrados de la première préforme consolidée 30A.

On comprend qu'une gorge peut également être usinée dans la deuxième préforme consolidée 30C formant préforme de plateforme en pied de pale. De manière similaire à ce qui a été décrit pour la deuxième préforme consolidée 30B formant préforme de plateforme en tête de pale, des canaux débouchent sur une face externe 30C2 de la deuxième préforme consolidée 30C formant préforme de plateforme en pied de pale. Les canaux 36 forment des orifices 34 sur la face externe 30C2 de la deuxième préforme consolidée 30C formant préforme de plateforme en pied de pale. Les canaux 36 peuvent présenter un angle α par rapport à la face externe 30C2, l'angle α étant supérieur ou égal à 1° et inférieur ou égal à 20°.

On comprend que la deuxième préforme consolidée 30C formant préforme de plateforme en pied de pale comporte une face interne 30C4, opposée à la face externe 30C2 et faisant face à la première préforme consolidée 30A. On comprend que la face interne 30C4 délimite en partie la veine aérodynamique.

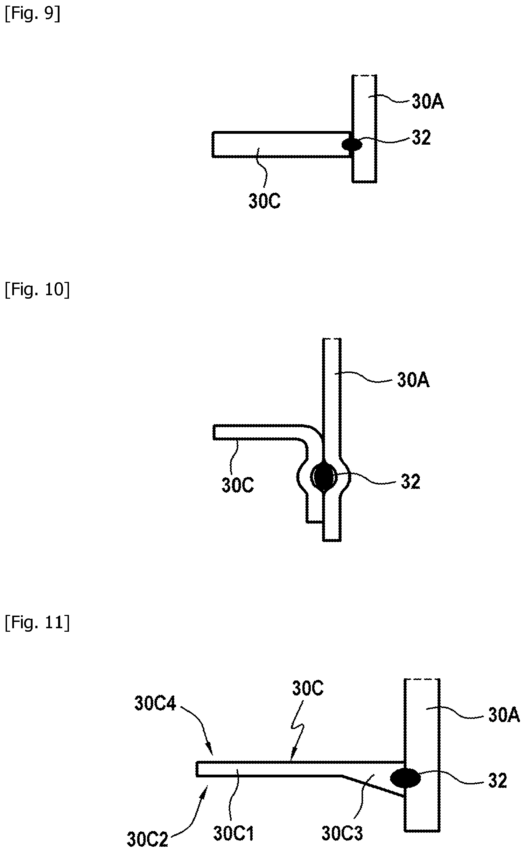

De manière similaire, la gorge 38 peut être usinée dans la première préforme consolidée 30A, comme représenté schématiquement sur la figure 9 pour la deuxième préforme consolidée 30C formant préforme de plateforme en pied de pale.

Dans certains modes de réalisation, la gorge 38 peut être formée lors de l'étape de réalisation de la première préforme fibreuse 28A et de la deuxième préforme fibreuse 28B, 28C, par déformation des préformes fibreuses, lors d'une étape 116 de formation de la gorge 38, comme représenté sur la figure 10. Cette étape de formation 116 de la gorge 38 est réalisée avant l'étape de consolidation 108 de la préforme fibreuse.

Dans certains modes de réalisation, la deuxième préforme consolidée 30C formant préforme de plateforme en pied de pale peut présenter une partie comportant une surépaisseur 30C3 par rapport une partie 30C1 de la deuxième préforme consolidée 30C, la partie comportant la surépaisseur 30C3 délimitant le logement 30D, 30E, comme représenté sur la figure 11 pour la deuxième préforme consolidée 30C formant préforme de plateforme en pied de pale. On notera que l'épaisseur est modifiée sur la face externe 30C2 de la deuxième préforme consolidée 30C formant préforme de plateforme en pied de pale afin de perturber le moins possible le flux aérodynamique dans la veine.

Les figures 9 à 11 représentent l'assemblage de la première préforme consolidée 30A avec la deuxième préforme consolidée 30C formant préforme de plateforme en pied de pale. On comprend que ces modes de réalisation peuvent s'appliquer de manière similaire pour l'assemblage de la première préforme consolidée 30A avec la deuxième préforme consolidée 30B formant préforme de plateforme en tête de pale.

On comprend que la gorge 38 peut être usinée dans une préforme et formée dans l'autre préforme consolidée avec laquelle est assemblée.

On comprend que la formation de la gorge 38 peut aussi comprendre la formation des canaux 36 dans la préforme.

La préforme fibreuse peut comprendre une gorge formée dans la préforme fibreuse et une étape d'usinage des canaux 36.

Dans certains modes de réalisation, une partie des torons consolidés 32 peuvent être retirées avant l'étape de co-densification 112.

Dans certains modes de réalisation, une partie des torons consolidés 32 peuvent être retirées après l'étape de co-densification 112.

A titre d'exemple non limitatif, les parties des torons consolidés 32 qui dépassent de la face externe 30B2, 30C2 des deuxièmes préformes consolidées 30B, 30C peuvent être conservées pendant l'étape de co-densification 112 pour favoriser la montée capillaire d'un liquide d'infiltration lors de l'étape de co-densification. Après co-densification 112, ces parties peuvent être retirées par usinage.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Procédé (100) de fabrication d'une aube de turbomachine en matériau composite à matrice céramique comprenant une pale et une plateforme, le procédé comprenant :
- réalisation (102) d'une première préforme fibreuse (28A) comprenant des fibres céramiques, la première préforme fibreuse (28A) formant préforme de pale ;
- réalisation (104) d'une deuxième préforme fibreuse (28B, 28C) comprenant des fibres céramiques, la deuxième préforme fibreuse comprenant un logement (28D, 28E), la deuxième préforme fibreuse (28B, 28C) formant préforme de plateforme ;
- réalisation (106) d'un toron de fibres céramiques (32A) ;
- consolidation (108) de la première préforme fibreuse (28A) en une seule pièce, de la deuxième préforme fibreuse (28B, 28C) en une seule pièce et du toron de fibres céramiques (32A) pour former une première préforme consolidée (30A), une deuxième préforme consolidée (30B, 30C) comprenant un logement (30D, 30E) et un toron consolidé (32) ;
- assemblage (110) de la première préforme consolidée (30A) et de la deuxième préforme consolidée (30B, 30C), par engagement et coopération de la première préforme consolidée (30A) dans le logement (30D, 30E), le toron consolidé (32) étant interposé entre la première préforme consolidée (30A) et la deuxième préforme consolidée (30B, 30C) ;
- co-densification (112) de l'assemblage pour former l'aube de turbomachine.

2. Procédé (100) selon la revendication 1, dans lequel le toron consolidé (32) est disposé dans une gorge (38) formée au moins dans l'une de la première préforme consolidée (30A) ou de la deuxième préforme consolidée (30B, 30C).

3. Procédé (100) selon la revendication 2, dans lequel la gorge (38) est au moins partiellement usinée.

4. Procédé (100) selon la revendication 2 ou 3, dans lequel la gorge (38) est au moins partiellement formée lors de l'étape de réalisation de la première préforme fibreuse (28A) et/ou de la deuxième préforme fibreuse (28B, 28C).

5. Procédé (100) selon l'une quelconque des revendications 2 à 4, dans lequel la deuxième préforme consolidée (30B, 30C) comprend deux canaux (36) d'insertion du toron consolidé (32) dans la gorge (38).

6. Procédé (100) selon la revendication 5, dans lequel les canaux (36) débouchent sur une face externe (30B2, 30C2) de la deuxième préforme consolidée (30B, 30C).

7. Procédé (100) selon la revendication 6, dans lequel les canaux (36) présentent un angle (α) par rapport à la face externe (30B2, 30C2) supérieur ou égal à 1° et inférieur ou égal à 20°.

8. Procédé (100) selon l'une quelconque des revendications 1 à 7, dans lequel une partie du toron consolidé (32) est retirée avant l'étape de co-consolidation.

9. Procédé (100) selon l'une quelconque des revendications 1 à 7, dans lequel une partie du toron consolidé (32) est retirée après l'étape de co-consolidation.

10. Procédé (100) selon l'une quelconque des revendications 1 à 9, dans lequel, la deuxième préforme consolidée (30B, 30C) comprend une partie comportant une surépaisseur (30C3), la partie comportant la surépaisseur (30C3) délimitant le logement (30D, 30E).

11. Procédé (100) selon l'une quelconque des revendications 1 à 10, dans lequel la première préforme fibreuse comprend des fibres céramiques tissées multicouche, des nappes de fibres céramiques ou des fibres céramiques longues unidirectionnelles.

12. Procédé (100) selon l'une quelconque des revendications 1 à 11, dans lequel la deuxième préforme fibreuse comprend des fibres céramiques tissées multicouche, des nappes de fibres céramiques, des fibres céramiques longues unidirectionnelles ou des fibres céramiques courtes.

## Patentansprüche

1. Verfahren (100) zur Herstellung einer Turbomaschinenschaufel aus Verbundmaterial mit keramischer Matrix, die ein Blatt und eine Plattform umfasst, wobei das Verfahren umfasst:
- Verwirklichung (102) einer ersten Faservorform (28A) umfassend keramische Fasern, wobei die erste Faservorform (28A) die Vorform des Blatts bildet,
- Verwirklichung (104) einer zweiten Faservorform (28B, 28C), die keramische Fasern umfasst, wobei die zweite Faservorform eine Aufnahme (28D, 28E) umfasst, wobei die zweite Faservorform (28B, 28C) die Vorform der Plattform bildet,
- Verwirklichung (106) einer Litze aus keramischen Fasern (32A),
- Verfestigung (108) der ersten Faservorform (28A) in einem Stück, der zweiten Faservorform (28B, 28C) in einem Stück und der Litze aus keramischen Fasern (32A), um eine erste verfestigte Vorform (30A), eine zweite verfestigte Vorform (30B, 30C), die eine Aufnahme (30D, 30E) umfasst, und eine verfestigte Litze (32) zu bilden,
- Zusammenbau (110) der ersten verfestigten Vorform (30A) und der zweiten verfestigten Vorform (30B, 30C), durch Ineingriffbringen und Zusammenwirken der ersten verfestigten Vorform (30A) in die/mit der Aufnahme (30D, 30E), wobei die verfestigte Litze (32) zwischen der ersten verfestigten Vorform (30A) und der zweiten verfestigten Vorform (30B, 30C) eingelegt wird,
- gemeinsame Verdichtung (112) der Anordnung, um die Turbomaschinenschaufel zu bilden.

2. Verfahren (100) nach Anspruch 1, wobei die verfestigte Litze (32) in einer Nut (38) angeordnet wird, die in zumindest einer von der ersten verfestigten Vorform (30A) oder der zweiten verfestigten Vorform (30B, 30C) gebildet ist.

3. Verfahren (100) nach Anspruch 2, wobei die Nut (38) zumindest zum Teil maschinell bearbeitet ist.

4. Verfahren (100) nach Anspruch 2 oder 3, wobei die Nut (38) zumindest zum Teil während des Schritts der Verwirklichung der ersten Faservorform (28A) und/oder der zweiten Faservorform (28B, 28C) gebildet wird.

5. Verfahren (100) nach einem der Ansprüche 2 bis 4, wobei die zweite verfestigte Vorform (30B, 30C) zwei Kanäle (36) zur Einführung der verfestigten Litze (32) in die Nut (38) umfasst.

6. Verfahren (100) nach Anspruch 5, wobei die Kanäle (36) auf einer Außenseite (30B2, 30C2) der zweiten verfestigten Vorform (30B, 30C) ausmünden.

7. Verfahren (100) nach Anspruch 6, wobei die Kanäle (36) einen Winkel (α) in Bezug auf die Außenseite (30B2, 30C2) von mehr als oder gleich 1° und weniger als oder gleich 20° aufweisen.

8. Verfahren (100) nach einem der Ansprüche 1 bis 7, wobei ein Teil der verfestigten Litze (32) vor dem Schritt der gemeinsamen Verfestigung entfernt wird.

9. Verfahren (100) nach einem der Ansprüche 1 bis 7, wobei ein Teil der verfestigten Litze (32) nach dem Schritt der gemeinsamen Verfestigung entfernt wird.

10. Verfahren (100) nach einem der Ansprüche 1 bis 9, wobei die zweite verfestigte Vorform (30B, 30C) einen Teil umfasst, der eine Verdickung (30C3) beinhaltet, wobei der Teil, der die Verdickung (30C3) beinhaltet, die Aufnahme (30D, 30E) begrenzt.

11. Verfahren (100) nach einem der Ansprüche 1 bis 10, wobei die erste Faservorform mehrlagig verwebte keramische Fasern, Matten aus keramischen Fasern oder lange unidirektionale keramische Fasern umfasst.

12. Verfahren (100) nach einem der Ansprüche 1 bis 11, wobei die zweite Faservorform mehrlagig verwebte keramische Fasern, Matten aus keramischen Fasern, lange unidirektionale keramische Fasern oder kurze keramische Fasern umfasst.

## Claims

1. A method (100) for manufacturing a turbomachine blade made of ceramic-matrix composite material comprising an airfoil and a platform, the method comprising:
- the production (102) of a first fibrous preform (28A) comprising ceramic fibers, the first fibrous preform (28A) forming an airfoil preform;
- the production (104) of a second fibrous preform (28B, 28C) comprising ceramic fibers, the second fibrous preform comprising a housing (28D, 28E), the second fibrous preform (28B, 28C) forming a platform preform;
- the production (106) of a strand of ceramic fibers (32A);
- the consolidation (108) of the first fibrous preform (28A) in one piece, of the second fibrous preform (28B, 28C) in one piece and of the strand of ceramic fibers (32A) to form a first consolidated preform (30A), a second consolidated preform (30B, 30C) comprising a housing (30D, 30E) and a consolidated strand (32);
- the assembly (110) of the first consolidated preform (30A) and of the second consolidated preform (30B, 30C), by engagement and cooperation of the first consolidated preform (30A) in the housing (30D, 30E), the consolidated strand (32) being interposed between the first consolidated preform (30A) and the second consolidated preform (30B, 30C);
- the co-densification (112) of the assembly to form the turbomachine blade.

2. The method (100) according to claim 1, wherein the consolidated strand (32) is disposed in a groove (38) formed at least in one of the first consolidated preform (30A) or of the second consolidated preform (30B, 30C).

3. The method (100) according to claim 2, wherein the groove (38) is at least partially machined.

4. The method (100) according to claim 2 or 3, wherein the groove (38) is at least partially formed during the step of producing the first fibrous preform (28A) and/or the second fibrous preform (28B, 28C).

5. The method (100) according to any one of claims 2 to 4, wherein the second consolidated preform (30B, 30C) comprises two channels (36) for inserting the consolidated strand (32) into the groove (38).

6. The method (100) according to claim 5, wherein the channels (36) open out onto an outer face (30B2, 30C2) of the second consolidated preform (30B, 30C).

7. The method (100) according to claim 6, wherein the channels (36) have an angle (α) relative to the outer face (30B2, 30C2) greater than or equal to 1° and smaller than or equal to 20°.

8. The method (100) according to any one of claims 1 to 7, wherein part of the consolidated strand (32) is removed before the co-consolidation step.

9. The method (100) according to any one of claims 1 to 7, wherein part of the consolidated strand (32) is removed after the co-consolidation step.

10. The method (100) according to any one of claims 1 to 9, wherein the second consolidated preform (30B, 30C) comprises a part including an extra thickness (30C3), the part including the extra thickness (30C3) delimiting the housing (30D, 30E).

11. The method (100) according to any one of claims 1 to 10, wherein the first fibrous preform comprises multilayer woven ceramic fibers, webs of ceramic fibers or unidirectional long ceramic fibers.

12. The method (100) according to any one of claims 1 to 11, wherein the second fibrous preform comprises multilayer woven ceramic fibers, webs of ceramic fibers, unidirectional long ceramic fibers or short ceramic fibers.
